# EUROPÄISCHE PATENTSCHRIFT

(11) **EP 1 085 281 B1**
(45) Veröffentlichungstag und Bekanntmachung des Hinweises auf die Patenterteilung: **27.04.2005**
(21) Anmeldenummer: 00117067.9
(22) Anmeldetag: 09.08.2000
(51) Int. Cl.: F25D 23/10

(54) **Kältegerät, das nach dem Absorberprinzip arbeitet, sowie Fahrzeug mit einem derartigen Kältegerät**
Refrigerator of the absorption type, as well as vehicle with such refrigerator
Réfrigérateur à absorption, ainsi que véhicule muni d'un tel réfrigérateur

(30) Priorität: 14.09.1999 DE 19943819; 19.05.2000 DE 10024893
(43) Veröffentlichungstag der Anmeldung: 21.03.2001
(73) Patentinhaber: Dometic GmbH, 57074 Siegen (DE)
(72) Erfinder: Lorek, Manfred, 57074 Siegen (DE)
(74) Vertreter: GROSSE BOCKHORNI SCHUMACHER

(56) Entgegenhaltungen:
- EP-A- 0 889 295
- DE-A- 3 330 037
- US-A- 1 978 483
- US-A- 5 782 105

## Beschreibung

Die Erfindung bezieht sich auf ein Kältegerät gemäß dem Oberbegriff des Patentanspruchs 1 und auf ein Fahrzeug mit einem derartigen Kältegerät gemäß dem Oberbegriff des Patentanspruchs 5.

In einem Camping-Fahrzeug wird in der Regel neben anderen Küchengeräten ein Kühlgerät eingebaut. Oft wird ein nach dem Absorberprinzip arbeitendes Kühlgerät verwendet, weil ein derartiges Gerät sich durch sein im Vergleich zu Kompressorbetriebenen Kühlgeräten geräuschlos arbeitendes Kälteaggregat auszeichnet.

Um die Funktion dieses Kühlgeräts vom Standort des Campingfahrzeugs unabhängig sicherstellen zu können, wird das Kühlgerät so ausgeführt, daß die zur Wasser- und Ammoniak-Trennung im Kälteaggregat benötigte Heizeinrichtung wahlweise mittels der Bordbatterie (12 V DC), mittels der öffentlichen Spannungsversorgung (110 oder 220 V AC), mittels des Fahrzeugtreibstoffs (Diesel oder Benzin) oder mittels Flüssiggas beheizt werden kann.

Aus diesem Grund ist es erforderlich, eine ganze Reihe von Leitungen zu frontseitig angeordneten Bedien- und Anzeigeelementen und von diesen wieder weg zu führen. Zu nennen ist als Bedienelement beispielshaft ein Knebel zur Auswahl des Energieträgers und ein Knebel zur Steuerung der Gaszufuhr. Dies bedingt entsprechend die Zu- und Abführung von elektrischen Leitungen mit 12 VDC und 110 oder 220 VAC sowie einer Gasleitung zum Brenner, einer Zündleitung und einer Gasleitung vom Gasbehältnis.

Weil das Kälteaggregat des Absorber-Kühlgeräts in der Regel rückseitig angeordnet ist, ist damit die Leitungsführung von der Rückseite des Gehäuses über eine obere Übergangskante und die Oberseite des Gehäuses zur Gerätefront quasi vorgegeben.

Eine weitere vorgegebene Randbedingung stellt eine Norm G 607 bzw. DIN EN 1949 dar, die besagt, daß Kühlgeräte in Campingfahrzeugen, wie Wohnwagen, Wohnmobilen, und sonstigen Fahrzeugen zugdicht eingebaut sein müssen. Dies bedeutet, daß die Verbrennungsluft für den Brenner des Absorber-Kühlgeräts nicht aus dem Fahrzeuginnenraum entnommen werden darf und die Brennerabgase am direkten Eintritt in den Fahrzeuginnenraum gehindert werden müssen.

Aus diesen beiden vorstehend genannten Randbedingungen wird deutlich, daß die Abdichtung des Fahrzeuginnenraums gegenüber dem für den Brenner bereitzustellenden Luftkanal im Bereich des Absorber-Kühlgeräts aufgrund der durch die Vielzahl der Leitungen verursachten Flächenunstetigkeit besonders schwierig und aufwendig ist.

Derzeit hinsichtlich der Kosten und des Aufwandes sowie ggfs. auch hinsichtlich des Abdichtungsergebnisses nicht zufriedenstellende Lösungen sind aus der EP 0 889 295 A2, der DE 33 30 037 C2 und der US-PS 3,512,371 bekannt.

Ausgehend von diesem Stand der Technik liegt der Erfindung die Aufgabe zugrunde, ein Absorber-Kältegerät und ein Fahrzeug mit einem derartigen Absorberkältegerät anzugeben, bei denen eine Abdichtung des Fahrzeuginnenraums gegenüber dem Luftkanal für den Brenner besonders einfach gelöst ist, so daß diese Abdichtung zusätzlich auch beim Einbau des Kühlgeräts in das Fahrzeug durch einen Laien, unter der Annahme der Anwendung einer angemessenen Sorgfalt des Laiens, noch sichergestellt werden kann.

Diese Aufgabe wird bei einem Kältegerät gemäß dem Oberbegriff des Patentanspruchs 1 erfindungsgemäß dadurch gelöst, daß am Übergang von der Gehäuseoberseite und/oder von einem Gehäuse-Seitenteils und/oder von einer Gehäuseunterseite zu einer Gehäuserückseite mindestens ein Einschnitt vorgesehen ist, in dem die Leitungen ohne Überschreitung der Gehäusehöhe an der Übergangskante von der Gehäuseoberseite bzw. dem Gehäuseseitenteil bzw. der Gehäuseunterseite zur Gehäuserückseite geführt sind, und dass in dem Einschnitt ein Trennelement angebracht ist und mittels des Trennelements eine ununterbrochene, im Sinne von glatt und bündig verlaufende Übergangskante erzielt ist.

Auf diese Weise ergeben sich an der Übergangskante keine über die dort vorherrschenden Gehäuseabmessungen hinausgehende Überhöhungen durch die dort verlaufenden Leitungen, weil sämtliche dort verlaufende Leitungen aufgrund des Einschnitts quasi in diesem Bereich im Gehäuse verlaufend geführt sind. Aus diesem Grund gestaltet sich daher die Abdichtung gerade an dieser besonders sensiblen Stelle nun mehr besonders einfach.

Das in dem Einschnitt angebrachte Trennelement führt eine weitgehend gasdichte Durchführung der Leitungen von der Geräteoberseite zur Geräterückseite in diesem Bereich herbei. Um dabei nun eine besonders einfache Abdichtung beispielsweise nur mit einer einzigen Dichtlippe erzielen zu können ist das Trennelement so ausgestaltet, daß mittels des Trennelements eine ununterbrochene Übergangskante erzielt ist.

Mittels des Trennelements kann zudem in weiterer Ausgestaltung der Erfindung eine bisher an dieser Stelle noch nicht und auch ansonsten bisher nur unzureichend gelöste Aufgabe, nämlich die Schaffung einer einfach aufgebauten und zu montierenden Zugentlastung für die Leitung zu den Bedien- und Anzeigeelementen, gelöst werden, wenn im Trennelement zumindest ein Teil der Leitungen mit einer Zugentlastung bezogen auf die Bedien- und Anzeigeelemente anordenbar sind. Beispielhaft sei die Führung von elektrischen Kabeln, aber auch von Gasleitungen, in sogenannten Labyrinthschikanen genannt. Ein hierfür geeignetes Trennelement kann diesbezüglich leicht als Kunststoffspritzgußteil gefertigt werden.

Eine hinsichtlich der Montage des Trennelements besonders einfache Lösung ergibt sich, wenn das Trennelement in dem Einschnitt verrastbar ist.

Eine ebenfalls hinsichtlich der Montage auch unter dem Gesichtspunkt der Zugentlastung besonders einfache Ausgestaltung der Erfingung ergibt sich, wenn das Trennelement zweiteilig aufgebaut ist und ein Unterteil und ein Oberteil aufweist, wobei die Leitungen in dem Unterteil in Aufnahmen einlegbar sind und das Oberteil mit den Aufnahmen zusammenwirkend auf dem Unterteil festsetzbar ist. Vorzugsweise kommt dabei ein Festsetzen des Oberteils durch Verrasten oder Verschrauben in Betracht.

Hinsichtlich des Fahrzeugs mit einem Kältegerät der voranstehenden Art wird die weiter oben genannte Aufgabe erfindungsgemäß dadurch gelöst, daß ein Luftkanal ausgehend von einem ersten Lüftungsgitter in der Fahrzeugwand für Brennerzuluft zu einem zweiten Lüftungsgitter in der Fahrzeugwand für das Brennerabgas vorgesehen ist, wobei die Geräterückseite Bestandteil der Wandung des Luftkanals ist und der Luftkanal mittels einer an der Übergangskante des Geräts zur Anlage bringbaren Dichtlippe gegenüber dem Fahrzeuginnenraum weitgehend gasdicht ausgeführt ist.

Zum besseren Verständnis dieser voranstehenden Merkmalskombination sei bemerkt, daß zwei unterschiedliche Montagevarianten mit dem Begriff "an der Übergangskante zur Anlage bringbar" gemeint sind. Zum einen bedeutet dies, daß die Dichtlippe in der für das Gerät vorgesehenen Nische montiert ist und so tatsächlich an der Übergangskante anliegt. Zum anderen bedeutet dies, daß die Dichtlippe an der Übergangskante montiert ist und folglich an der Wandung der Nische anliegt.

Damit ist sichergestellt, daß selbst einem Laien zugemutet werden kann, beim Einbau des Kühlgeräts in sein Fahrzeug vor dem Einbau des Geräts nur an einer vorgegebenen Stelle eine einfache Dichtlippe montieren zu müssen, die ohne weiteres Zutun des Laiens oder auch des Einbaufachmanns einzigallein aufgrund der erfindungsgemäßen Ausgestaltung des Kühlgeräts dicht an der Gehäuses des Kühlgeräts, nämlich im Bereich der oberen rückseitigen Übergangskante, bzw. dicht an der Wandung der Gerätenische anliegt. Aus diesen Gründen ist daher die Erzeugung eines undichten Luftkanals nur dann noch möglich, wenn bei grob fahrlässiger Mißachtung dieser vergleichsweise extrem einfachen Einbauregeln die Anbringung der Dichtlippe ganz vergessen oder vollkommen unsachgemäß vorgenommen wird.

In zweckmäßiger Ausgestaltung der Erfindung ist es vorgesehen, daß der Luftkanal gegenüber dem Fahrzeuginnenraum zumindest teilweise thermisch isoliert ist. Auf diese Weise wird daher auch der Wärmeverlust im Fahrzeuginnenraum deutlich herabgesetzt, durch den sich der Fahrzeugbenutzer ansonsten bei niedrigen Außentemperaturen gelegentlich genötigt sah, die in der Fahrzeugwandung vorgesehenen Lüftungsgitter von außen zu verschließen.

Der Einbau des Kühlgeräts in das Fahrzeug ist besonders einfach bei einem Fahrzeug gelöst, bei dem die Dichtlippe als Bestandteil des Luftkanals vor dem Hinzufügen der Geräterückseite in den Luftkanal montierbar ist. Damit ist die Dichtlippe bereits montiert, wenn das Kühlgerät in der Regel in die in dem Fahrzeug vorgesehene Nische eingeschoben wird.

Weitere vorteilhafte Ausgestaltungen der Erfindung sind den übrigen Unteransprüchen zu entnehmen.

Ausführungsbeispiele der Erfindung werden anhand einer Zeichnung näher erläutert. Dabei zeigen:
- Fig. 1: in perspektivischer Darstellung einen Ausschnitt auf eine Aufsicht auf ein Absorberkühlgerät;
- Fig. 2: in perspektivischer Darstellung die Einbausituation für das Absorberkühlgerät gemäß Figur 1 in ein Wohnmobil;
- Fig. 3: einen Längsschnitt durch das Absorberkühlgerät gemäß Figur 1 im eingebauten Zustand mit einer Dichtlippe in einer ersten Ausführungsform; und
- Fig. 4: einen Längsschnitt durch das Absorberkühlgerät gemäß Figur 1 im eingebauten Zustand mit einer Dichtlippe in einer zweiten Ausführungsform.

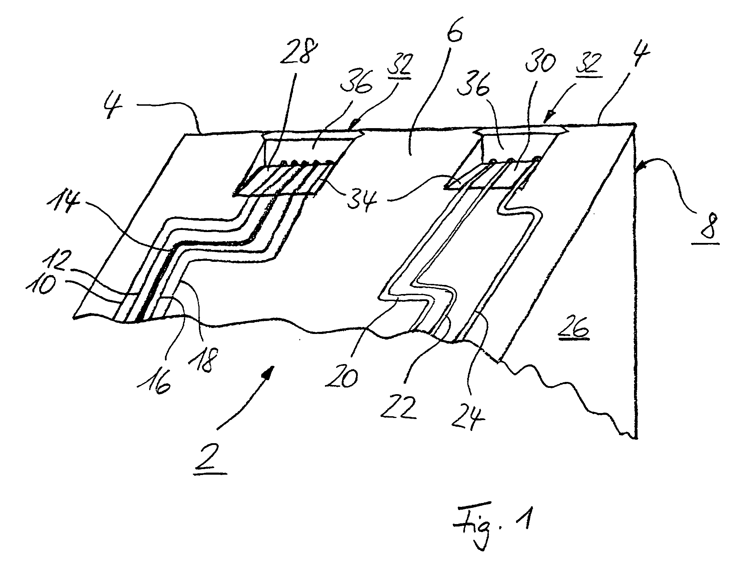

Fig. 1 zeigt in perspektivischer Darstellung eine Draufsicht auf ein Absorberkühlgerät 2 im Bereich einer Übergangskante 4 von einer Gehäuseoberseite 6 zu einer Gehäuserückseite 8. Auf der Gehäuseoberseite 6 verlaufend sind zwei 12V-Gleichstromleitungen 10, 12, ein Flachbandkabel 14, zwei 220V-Wechselstromleitungen 16, 18, eine Gaszuführungsleitung 20 zu einem hier nicht weiter dargestellten rückseitig angeordneten Gasbrenner, eine Zündleitung 22 für den Gasbrenner und eine Gasversorgungsleitung 24 vom einem hier nicht weiter dargestellten Gasbehälter angeordnet. Die Gehäuseoberseite 6 und die Gehäuserückseite 8 sind Bestandteile eines thermisch isolierten (umschäumten) Gehäuses 26, das einen in dieser zeichnerische Darstellung nicht darstellbaren Innenraum, den eigentlichen Nutzraum, umgibt.

In einem der Gehäuserückseite 8 zugewandten Bereich der Gehäuseoberseite 6 sind zwei Einschnitte 28 und 30 ausgebildet. In dem in der Fig. 1 links angeordneten Einschnitt 28 sind die vorstehend genannte elektrischen Leitungen 10 bis 18 so geführt, daß diese Leitungen 10 bis 18 im Bereich der Übergangskante 4 quasi im Gehäuse. 26 liegend verlegt sind und damit nicht in diesem Abschnitt über die Gehäusehöhe herausragen. Zur Befestigung der Leitungen 10 bis 18 ist ein Trennelement 32 vorgesehen, das zweiteilig ausgeführt ist und ein Grundteil 34 und ein Steckteil 36 aufweist, wobei das Grundteil 34 bereits vor dem Schäumungsprozess bei der Gehäusemontage angebracht wird. In der Endmontage werden die elektrischen Leitungen 10 bis 18 und das Flachbandkabel 14 in das Grundteil 34 verlegt und anschließend mit dem Steckteil 36 fixiert.

Eine entsprechende Führung der gasführenden Leitungen 20 bis 24 ist analog in dem in der zeichnerischen Darstellung rechten Einschnitt 30 vorgesehen.

Im Zusammenwirken der Einschnitte 28, 30 und der Trennelemente 32 ist daher für die gesamten Leitungen 10 bis 24 eine von der Gehäuseoberseite 6 zur Gehäuserückseite 8 verlaufende Führung geschaffen, die den Bereich unmittelbar an der Übergangskante 4 bündig und glatt verlaufen läßt. Eine gasseitige Trennung von der Geräterückseite 8 zu den übrigen Geräteflächen ist daher besonders im Bereich der Übergangskante besonders einfach lösbar, beispielsweise mittels einer in einfacher Weise an der Übergangskante zur Anlage bringbaren, hier jedoch nicht weiter dargestellten Dichtlippe.

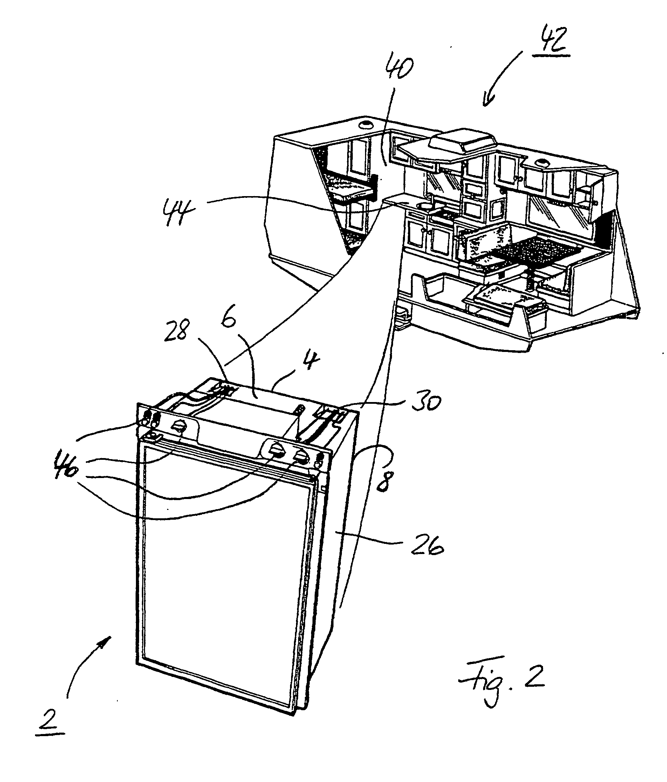

Fig. 2 zeigt in perspektivischer Darstellung die Einbausituation für das Absorberkühlgerät 2 in einem Innenraum 40 eines Wohnmobils 42. Das Absorberkühlgerät 2, von dem hier auch die frontseitig angeordneten Bedienelemente 46 erkennbar sind, wird von vorn in eine Möbelnische 44 eingeschoben. Damit das Absorberkühlgerät 2 zuverlässig arbeiten kann, ist im Kälteaggregat zur Wasser-Ammoniak-Trennung eine Heizvorrichtuhg 46 erforderlich, die hier wahlweise mit elektrischer Energie, d.h. mittels der 12 V Bordbatterie oder 220 V Netzspannung (alternativ 110 V), oder mittels Gas beheizbar ist.

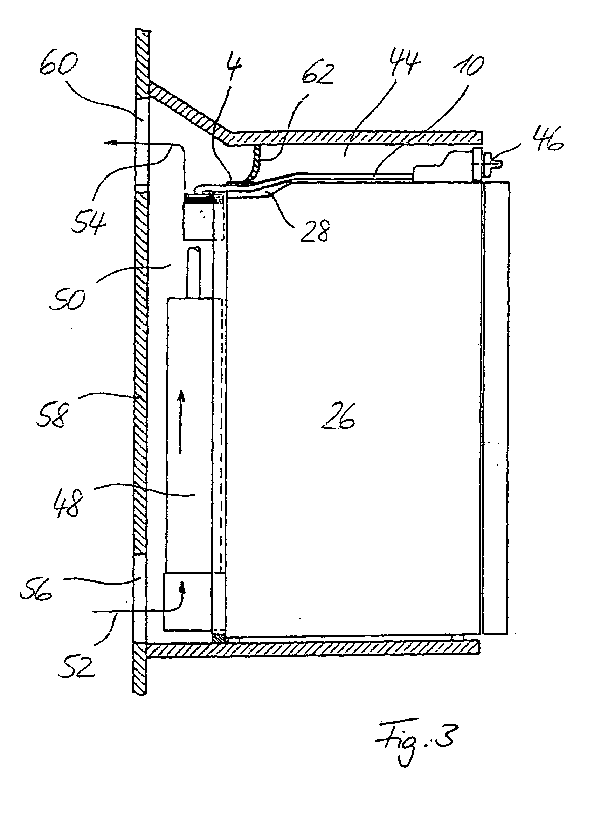

Für den Betrieb mit Gas ist ein Gasbrenner 48 erforderlich, wie er in Fig. 3, die einen Längsschnitt durch das Absorberkühlgerät gemäß Fig. 1 im eingebauten Zustand mit einer Dichtlippe 62 in einer ersten Ausführungsform zeigt, schematisch dargestellt ist. Mit dem Einschieben des Absorberkühlgeräts 2 in die Nische 44 wird ein Luftkanal 50 für die Zuluft 52 zum Gasbrenner 48 und das Brennerabgas 54 vom Gasbrenner 48 gebildet. Damit ist die Gehäuserückseite 8 zugleich integraler Bestandteil der Wandung des Luftkanals 50. Dieser Luftkanal 50 weist eingangsseitig ein erstes Lüftungsgitter 56 in einer Außenwand 58 des Wohnmobils 42 und ausgangsseitig ein entsprechend ausgestaltetes zweites Lüftungsgitter 60 auf.

Die besondere Problematik des gasdichten Abschluß des Luftkanals 50 vom Innenraum 40 des Wohnmobils 42 wird im besonderen am sensiblen Bereich der rückwärtigen Übergangskante 4 durch die einfach ausgestaltete Dichtlippe 62 erreicht, weil aufgrund der Tieferlegung der hier erkennbaren Leitung 10 im Bereich der Übergangskante 4 eine glatte Geräteoberfläche gebildet ist, an der die Dichtlippe 62 dicht anliegt. In der vorliegenden ersten Ausfühungsform ist die Dichtlippe 62 vor dem Einschieben des Absorberkühlgeräts 2 auf der Unterseite der Möbelnische 44 befestigt worden.

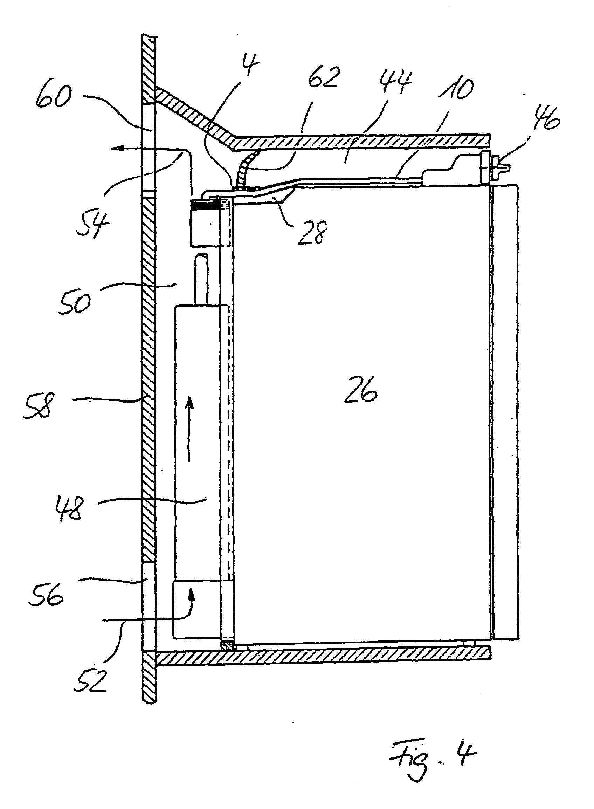

Eine diesbezüglich zweite Ausführungsform ist in der Fig. 4 gezeigt, bei der die Dichtlippe 62 vor dem Einschieben des Absorberkühlgeräts 2 in die Möbelnische 44 auf der Übergangskante 4 befestigt wird. Auf diese Weise ist es vermieden, daß beim Einbau des Absorberkühlgeräts 2 die Dichtlippe 62 nicht in der richtigen Nischetiefe an der Übergangskante 4 anliegt, vorausgesetzt, daß für das Absorberkühlgerät 2 beim Einschieben in die Nische 44 ein Tiefenanschlag gebildet ist.

## Patentansprüche

1. Kältegerät (2), das nach dem Absorberprinzip arbeitet, mit einem auf einer Geräterückseite (8) angeordneten Kälteaggregat, das einen Gasbrenner umfasst, und mit auf einer Oberseite (6) des Gehäuses (26) des Kältegerätes geführten Leitungen (10 bis 24) für Bedien- und/oder Anzeigeelemente
**dadurch gekennzeichnet, daß**
am Übergang von der Gehäuseoberseite (6) und/oder eines Gehäuseseitenteils und/oder einer Gehäuseunterseite zu der Gehäuserückseite (8) mindestens ein Einschnitt (28, 30) vorgesehen ist, in dem die Leitungen (10 bis 24) ohne Überschreitung der Gehäusehöhe von der Gehäuseoberseite (6) bzw. von dem Gehäuseseitenteil bzw. von der Gehäusunterseite zur Gehäuserückseite (8) geführt sind, und
daß
in dem Einschnitt (28, 30) ein Trennelement (32) angebracht ist, und
mittels des Trennelements (32) eine ununterbrochene, im Sinne von glatt und bündig verlaufende Übergangskante (4) erzielt ist.

2. Kältegerät (2) nach Anspruch 1,
**dadurch gekennzeichnet, daß**
im Trennelement (32) zumindest ein Teil der Leitungen (10 bis 24) mit einer Zugentlastung bezogen auf die Bedien- und Anzeigeelemente angeordnet sind.

3. Kältegerät (2) nach Anspruch 2,
**dadurch gekennzeichnet, daß**
das Trennelement (32) in dem Einschnitt (28, 30) verrastbar ausgebildet ist.

4. Kältegerät (2) nach Anspruch 2,
**dadurch gekennzeichnet, daß**
das Trennelement (32) zweiteilig aufgebaut ist und ein Unterteil (34) und ein Oberteil (36) aufweist, wobei die Leitungen (10 bis 24) in dem Unterteil (34) in die Aufnahmen einlegbar sind und das Oberteil (36) mit den Aufnahmen zusammenwirkend auf dem Unterteil (34) festsetzbar ist, vorzugsweise durch Verrasten.

5. Fahrzeug (42) mit einem Kältegerät (2) nach einem der Ansprüche 1 bis 4,
**dadurch gekennzeichnet, daß**
ein Luftkanal (50) ausgehend von einem ersten Lüftungsgitter (56) in einer Fahrzeugwandung (58) für Brennerzuluft (52) zu einem zweiten Lüftungsgitter (60) in der Fahrzeugwandung (58) für das Brennerabgas (54) vorgesehen ist, wobei die Geräterückseite (8) Bestandteil der Wandung des Luftkanals (50) ist und der Luftkanal (50) mittels einer an der Übergangskante (4) des Geräts (2) zur Anlage bringbaren Dichtlippe (62) gegenüber dem Fahrzeuginnenraum (40) weitgehend gasdicht ausgeführt ist.

6. Fahrzeug (42) nach Anspruch 5,
**dadurch gekennzeichnet, daß**
der Luftkanal (50) gegenüber dem Fahrzeuginnenraum (40) zumindest teilweise thermisch isoliert ist.

7. Fahrzeug (42) nach Anspruch 5,
**dadurch gekennzeichnet, daß**
die Dichtlippe (62) als Bestandteil des Luftkanals (50) vor dem Hinzufügen der Geräterückseite (8) in.den Luftkanal (50) montier ist.

8. Fahrzeug (42) nach Anspruch 5,
**dadurch gekennzeichnet, daß**
die Dichtlippe (62) in der Möbelnische (44) auf der Übergangskante (4) vorgesehen ist.

## Claims

1. Refrigerating device (2), which functions according to the absorption principle, having a refrigerating unit which is arranged on a rear side (8) of a device and which comprises a gas burner, and having lines (10 to 24) for operating and/or display elements, which lines are guided on an upper side (6) of the housing (26) of the refrigerating device,
**characterised in that**
at least one recess (28, 30) is provided at the transition from the upper side (6) and/or a side portion and/or a lower side of the housing to the rear side (8) of the housing, in which recess (28, 30) the lines (10 to 24) are guided without exceeding the housing height from the upper side (6) or from the side portion or from the lower side of the housing to the rear side (8) of the housing, and **in that** a separation element (32) is fitted in the recess (28, 30) and
an uninterrupted transition edge (4) which extends in a smooth and flush manner is obtained by means of the separation element (32).

2. Refrigerating unit (2) according to claim 1,
**characterised in that**
at least a portion of the lines (10 to 24) are arranged in the separation element (32) with strain relief relative to the operating and display elements.

3. Refrigerating device (2) according to claim 2,
**characterised in that**
the separation element (32) is constructed so as to be lockable in the recess (28, 30).

4. Refrigerating device (2) according to claim 2,
**characterised in that**
the separation element (32) is constructed in two pieces and has a lower portion (34) and an upper portion (36), the lines (10 to 24) in the lower portion (34) being able to be introduced into the receiving members and the upper portion (36) being able to be secured on the lower portion (34), preferably by locking, in a manner co-operating with the receiving members.

5. Vehicle (42) having a refrigerating device (2) according to any one of claims 1 to 4,
**characterised in that**
an air duct (50) is provided starting from a first ventilation grid (56) in a vehicle wall (58) for a burner air inlet (52) to a second ventilation grid (60) in the vehicle wall (58) for the burner gas outlet (54), the rear side (8) of the device being a constituent-part of the wall of the air duct (50) and the air duct (50) being constructed so as to be substantially gas-tight relative to the vehicle interior (40) by means of a sealing lip (62) which can be brought into abutment with the transition edge (4) of the device (2).

6. Vehicle (42) according to claim 5,
**characterised in that**
the air duct (50) is thermally insulated at least partially relative to the vehicle interior (40).

7. Vehicle (42) according to claim 5,
**characterised in that**
the sealing lip (62) is mounted as a constituent-part of the air duct (50) before the rear side (8) of the device is fitted to the air duct (50).

8. Vehicle (42) according to claim 5,
**characterised in that**
the sealing lip (62) is provided in the furniture recess (44) at the transition edge (4).

## Revendications

1. Réfrigérateur (2) qui fonctionne suivant le principe de l'absorption, muni d'une unité de froid disposée sur une face arrière (8) de l'appareil, unité qui comprend un brûleur à gaz, et de conduites (10 à 24) posées sur une face supérieure (6) du boîtier (26) du réfrigérateur pour les éléments de commande et/ou d'affichage, **caractérisé en ce qu'**au niveau de la jonction entre la face supérieure du boîtier (6) et/ou une partie latérale du boîtier et/ou une partie inférieure du boîtier et la face arrière du boîtier (8), est prévue au moins une encoche (28, 30), dans laquelle les conduites (10 à 24) sont posées en direction de la face arrière (8) du boîtier sans dépasser la hauteur du boîtier au niveau de la face supérieure (6) du boîtier ou de la partie latérale du boîtier ou de la face inférieure du boîtier, et **en ce qu'**un élément de séparation (32) est monté dans l'encoche (28, 30) et **en ce qu'**au moyen de l'élément de séparation (32), on obtient une arête de jonction (4) ininterrompue s'étendant de manière lisse et à plane.

2. Réfrigérateur (2) selon la revendication 1 **caractérisé en ce que**, dans l'élément de séparation (32), au moins une partie des conduites (10 à 24) est disposée avec une décharge de traction par rapport aux éléments de commande et d'affichage.

3. Réfrigérateur (2) selon la revendication 2 **caractérisé en ce que** l'élément de séparation (32) est configuré de manière à pouvoir s'enclencher dans l'encoche (28, 30).

4. Réfrigérateur (2) selon la revendication 2 **caractérisé en ce que** l'élément de séparation (32) est construit en deux parties et comprend une partie inférieure (34) et une partie supérieure (36), sachant que les conduites (10 à 24) peuvent être posées dans la partie inférieure, (34) dans les logements, et que la partie supérieure (36) peut être fixée sur la partie inférieure (34) en coopérant avec les logements, par enclenchement de préférence.

5. Véhicule (42) avec un réfrigérateur (2) selon l'une des revendications 1 à 4, **caractérisé en ce qu'**on a prévu un conduit d'air (50), partant d'une première grille d'aération (56) située dans la paroi de véhicule (58) pour l'amené d'air du brûleur (52) pour rejoindre une seconde grille d'aération (60) située dans la paroi de véhicule (58) pour le gaz d'échappement du brûleur (54), sachant que la face arrière (8) de l'appareil fait partie intégrante de la paroi du conduit d'air (50) et le conduit d'air (50) est réalisé de manière à être fortement étanche aux gaz par rapport à l'intérieur du véhicule (40), au moyen d'une lèvre d'étanchéité (62) pouvant être amenée en appui sur l'arête de jonction (4) de l'appareil (2).

6. Réfrigérateur (42) selon la revendication 5, **caractérisé en ce que** le conduit d'air (50) est thermiquement isolé par rapport à l'intérieur du véhicule (40), au moins de manière partielle.

7. Réfrigérateur (42) selon la revendication 5, **caractérisé en ce que** la lèvre d'étanchéité (62) est montée dans le conduit d'air (50) en tant que partie intégrante du conduit d'air (50) avant l'ajout de la face arrière (8) de l'appareil.

8. Réfrigérateur (42) selon la revendication 5, **caractérisé en ce que** la lèvre d'étanchéité (62) est prévue sur l'arête de jonction (4) dans le logement (44).
